# EUROPEAN PATENT SPECIFICATION

(11) **EP 0 550 156 B1**
(45) Date of publication and mention of the grant of the patent: **15.02.1995**
(21) Application number: 92311029.0
(22) Date of filing: 03.12.1992
(51) Int. Cl.: F16P 3/00, B25F 5/02

(54) **Safety lever assembly for a power tool**
Sicherheitshebeleinheit für ein Kraftwerkzeug
Assemblage de levier de sécurité pour un outil motorisé

(30) Priority: 20.12.1991 GB 9127132
(43) Date of publication of application: 07.07.1993
(73) Proprietor: DESOUTTER, LIMITED, Colindale London NW9 6ND (GB)
(72) Inventor: Sappal, Kulwinder Singh, West Harrow, Middlesex HA2 OSA (GB)
(74) Representative: Godwin, Edgar James

(56) References cited:
- FR-A- 2 290 016
- FR-A- 2 475 966
- GB-A- 2 025 562
- US-A- 2 183 032
- US-A- 4 016 684
- US-A- 4 267 747

## Description

This invention relates to power tools, particularly to such high-speed tools as grinders, for example, having an elongate body with a grippable portion and having an element which is to be actuated by means of a safety lever assembly in order to start the operation of the power tool. The tool may be powered by an air motor, in which case the actuable element may operate a valve controlling the supply of compressed air to the motor, or an electric motor, in which case the actuable element may operate an electrical switch.

The purpose of the safety lever assembly is to prevent unintentional starting of the power tool if it is gripped carelessly. A widely used assembly comprises a lever having a rear end portion pivotably mounted behind the actuable element. The lever is pivotable from an inactive position, in which it extends forwards at an angle to the body of the power tool, to an active position, in which it depresses the actuable element. In order to prevent accidental pivoting of the lever when the power tool is gripped, the body of the power tool carries a separate latch, which can adopt a latching position in which it engages between the lever and the body so as to prevent movement of the lever from the inactive position to the active position. The latch projects above the lever and can be moved to a non-latching position by pushing it forwards, e.g. by means of the operator's thumb.

A safety assembly according to the preamble of claims 1 and 6 and a power tool according to the preamble of claim 9 can be seen in US-A-4 016 684.

The present inventor has now found that the known arrangement has a disadvantage in that the latch element can be accidentally moved to the non-latching position if the operator's hand unintentionally slips forward while he is gripping the lever and applying forward thrust to the power tool.

It would therefore be desirable to be able to provide a safety lever assembly which avoids this disadvantage.

It would also be desirable to be able to provide a safety lever assembly which could be fitted to a power tool as a single unit rather than as separate parts.

The present invention provides a safety lever assembly in which only rearward movement of a manually engageable upper portion of the latch moves the latch from a latching position to a non-latching position.

Preferably, both the latch and the urging means are mounted on the lever. Also, it is preferable if the action of the urging means on the latch causes the latch to urge the lever from the active position towards the inactive position.

The invention will be described further, by way of example only, with reference to the accompanying drawings, in which:
Figure 1 is a part-sectioned side view of a safety lever assembly on a power tool which is only partially illustrated, in phantom, the lever of the assembly being in its inactive position;
Figure 2 is a view similar to Figure 1, the lever being in its active position;
Figure 3 is a view taken in the direction of arrow III in Figure 2; and
Figure 4 shows a detail IV in Figure 3 on an enlarged scale.

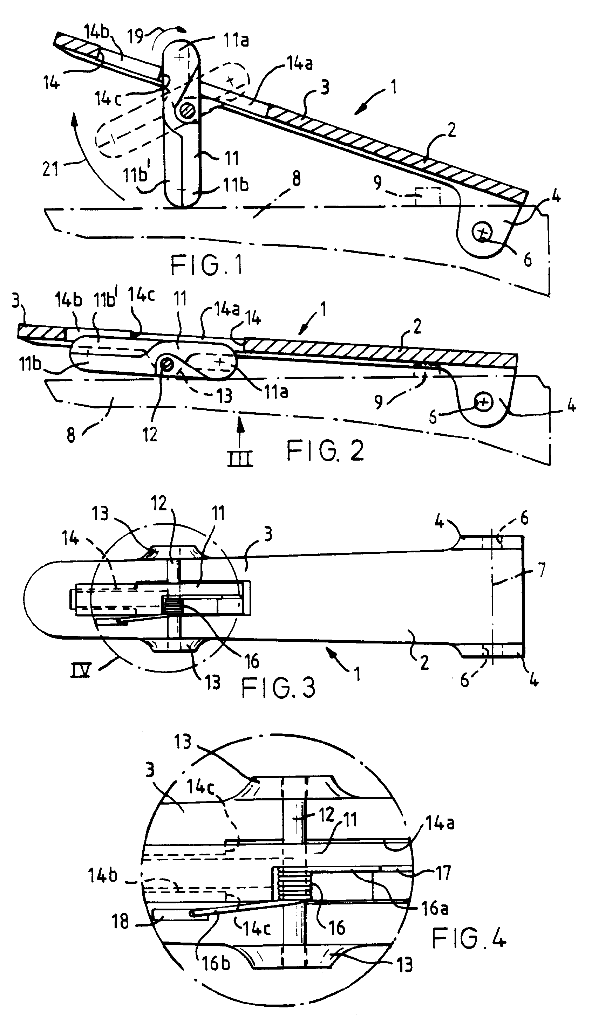

The safety lever assembly 1 illustrated in Figures 1 to 4 includes a lever 2 having an elongate front portion or arm 3 extending forwardly from a rear pivot portion constituted by a pair of depending brackets 4 having pivot holes 6 which lie on a common pivot axis 7. A pivot pin (not shown) engages in each hole 6 to mount the lever 2 pivotably on the upper part of the rear end portion of the elongate body of a power tool (e.g. a screw driving tool) having a grippable portion 8 along which the lever arm 3 extends.

An actuable element 9 projects upwards from the grippable portion 8 of the power tool, for engagement by the lever 2 in order to start the operation of the power tool. In the present embodiment, the tool is powered by an air motor and the element 9 operates a valve (not shown) for supplying compressed air to the motor. If the tool is instead powered by an electric motor, the element 9 may be a push button operating an electrical switch. In each case the element 9 is spring-loaded to the position shown in Figure 1.

In order to actuate the element 9 the lever 2 is pivoted from an inactive position (Figure 1) to an active position (Figure 2). In the inactive position the lever arm 3 extends forwards at an angle above the grippable portion 8 and the lever 2 does not actuate the element 9, the arm 3 either being out of contact with the element 9 (as shown) or just touching it. In the active position the arm 3 lies nearly parallel to the grippable portion 8 and the lever 2 depresses the element 9 against the spring force acting on it, which spring force tends to return the lever 2 to the inactive position.

A latch element 11 is mounted on a pivot pin 12 carried by a pair of depending lugs 13 formed on the lever arm 3. The latch element 11 is received by a stepped slot 14 in the arm 3, the slot 14 having a wider portion 14a connected to a narrower portion 14b by steps 14c constituting an abutment limiting the pivoting of the latching element 11. A coil spring or torsion spring 16, mounted on the pivot pin 12, has a first end portion 16a bearing against the base of a retaining and/or guiding groove 17 in the latching element 11 and a second end portion 16b bearing against the base of a retaining and/or guiding groove 18 in the underside of the arm 3, so that the element 11 is urged towards a latching position (shown in full line in Figure 1) in which an upper portion 11a of the element 11 abuts against the steps 14c and projects above the arm 3 so as to be engageable by the operator's thumb and in which a lower portion 11b projects below the arm 3.

In the latching position the latching element 11 maintains the lever 2 in the inactive position (Figure 1), even if the lever arm 2 is inadvertently gripped by the operator, since the longitudinal axis of the lower portion 11b is substantially in alignment with the normal to the grippable portion 8 at the point of contact between the element 11 and the said portion 8 (or lies mainly in front of the said normal). In order to move the element 11 to a non-latching position (shown in broken line in Figure 1), the upper portion 11a is pulled rearwardly by the operator's thumb, as indicated by arrow 19 in Figure 1, so that the lower portion 11b moves (as indicated by arrow 21) to a position in which, when it contacts the grippable portion 8, the axis of the lower portion 11b lies mainly behind the normal to the grippable portion 8 at the point of contact, with the result that gripping pressure on the lever arm 3 tends to move the latching element 11 further away from the latching position until the active position (Figure 2) of the lever 2 is reached. In the latching position, the pivot pin 12 lies substantially above (or in front of) the point (or region) of contact of the latching element 11 with the grippable portion 8.

It is to be noted that the action of the spring 16 on the latching element 11 tends to return the lever 2 to the inactive position from the active position. In the centre position the narrower slot portion 14b receives a narrower part 11b′ of the lower portion 11b of the latching element 11. In the inactive position of the lever 2, if the operator's hand accidentally slips forward along the lever arm 3, the upper part 11a of the element 11 remains in contact with the abutment 14c and there is no movement of the latching element 11 from the latching position towards the non-latching position.

Various modifications may be made within the scope of the invention. For example, the actuable element may be arranged in the rear end surface of the power tool and the lever may be cranked so that its rear pivot portion can be mounted on the rear end surface. The actuable element may be arranged behind the pivot axis 7 so that it is actuated by pulling instead of pushing. The pivotable latching element may be replaced by a latch which is slidable or both pivotable and slidable. The abutment on the lever may be provided behind the pivot pin 12 so as to abut the lower portion 11b of the element 11 below the pivot pin.

## Claims

1. A safety lever assembly (1), for a power tool having an elongate body with a grippable portion (8) and having an actuable element (9) which is to be actuated by the safety lever assembly (1) in order to start the power tool, the safety lever assembly (1) comprising:
(a) a lever (2) having an elongate front portion (3) and a pivot portion (4) which lies to the rear of the elongate front portion (3) and which is to be pivotably mounted on the power tool so that the lever (2) is pivotable between an inactive position, in which the elongate front portion (3) extends forwards at an angle above the grippable portion (8) of the power tool and the lever (2) does not actuate the actuable element (9), and an active position, in which the elongate front portion (3) lies nearer the grippable portion (8) and the lever (2) actuates the actuable element (9);
(b) a latch (11) movable between a latching position, in which it is capable of preventing movement of the lever (2) from the inactive position to the active position, and a non-latching position, in which it is capable of allowing the said movement, the latch (11) - in the latching position - having an upper portion (11a) which is manually engageable from above the lever (2) and a lower portion (11b) which projects below the lever (2); and
(c) means (16) for urging the latch (11) from the non-latching position to the latching position;
characterised in that only rearward movement from the free end of the front portion (3) towards the pivot portion (4) of the upper portion (11a) of the latch (11) moves the latch from the latching position to the non-latching position.

2. An assembly as claimed in claim 1, in which both the latch (11) and the urging means (16) are mounted on the lever.

3. An assembly as claimed in claim 1 or 2, in which the action of the urging means (16) on the latch (11) causes the latch to urge the lever (2) from the active position towards the inactive position.

4. An assembly as claimed in any preceding claim, in which, when the latch (11) is in its latching position and the lever (2) is in its inactive position, the latch (11) is in engagement with an abutment (14c) on the lever (2) in such a manner as to prevent forward movement of the upper portion (11a) of the latch.

5. An assembly as claimed in any preceding claim, in which the upper and lower portions (11a,11b) constitute a latching element (11) having an intermediate portion which is pivotably mounted on the lever (2).

6. A safety lever assembly (1) for a power tool, comprising a lever (2) having an elongate front portion (3) and a pivot portion (4) which lies to the rear of the elongate front portion (3), a latching element (11) pivotably mounted on the front portion (3) of the lever (2) for movement between a latching position, in which an upper portion (11a) of the latching element (11) is manually engageable from above the lever (2) and a lower portion (11b) of the latching element (11) projects below the lever (2), and a non-latching position, in which the latching element (11) lies approximately along the elongate front portion (3) of the lever (2), means (16) for urging the latching element (11) into the latching position, characterised in that the upper portion (11a) of the latching element (11) moves rearwardly when the latching element moves from the latching position to the non-latching position, and the safety lever assembly further comprising means (14c) for preventing movement of the latching element (11) to the non-latching position by forward movement of the upper portion (11a) of the latching element.

7. An assembly as claimed in claim 5 or 6, in which the urging means comprises a spring (16) acting between the latching element (11) and the lever (2).

8. An assembly as claimed in claim 7, in which the spring is a torsion spring (16) mounted on a pivot pin (12) carrying the latching element (11).

9. A power tool comprising an elongate body with a grippable portion (8), an element (9) which is actuable to start the power tool, and a safety lever assembly (1) according to any preceding claim.

10. A power tool as claimed in claim 9, in which the actuable element (9) projects from the elongate body in front of the pivot portion (4) of the lever (2) so as to be depressed when the lever (2) is moved to its active position.

## Patentansprüche

1. Sicherheitshebelaufbau (1) für ein Elektrowerkzeug mit einem länglichen Gehäuse mit einem Greifabschnitt (8) sowie einem betätigbaren Element (9), welches von der Sicherheitshebelaufbau (1) betätigt werden muß, um das Elektrowerkzeug zu starten, wobei der Sicherheitshebelaufbau (1) enthält:
(a) einen Hebel (2) mit einem länglichen Vorderabschnitt (3) und einem Schwenkabschnitt (4), der hinter dem länglichen Vorderabschnitt (3) angeordnet und schwenkbar so an dem Elektrowerkzeug angebracht ist, daß der Hebel (2) zwischen einer inaktiven Position, in der der längliche Vorderabschnitt (3) sich nach vorne in eineim Winkel oberhalb des Greifabschnitts (8) des Elektrowerkzeugs erstreckt und der Hebel (2) das betätigbare Element (9) nicht betätigt, und einer aktiven Position schwenkbar ist, in der der längliche Vorderabschnitt (3) näher am Greifabschnitt (8) liegt und der Hebel (2) das betätigbare Element (9) betätigt;
(b) einen Riegel (11), der zwischen einer verriegelnden Position, in der er eine Bewegung des Hebels (2) aus der inaktiven Position zur aktiven Position verhindern kann, und einer nicht-verriegelnden Position bewegbar ist, in der er die Bewegung erlauben kann, wobei der Riegel (11) in der verriegelnden Position einen oberen Bereich (11a), der manuell von oberhalb des Hebels (2) angreifbar ist, und einen unteren Bereich (11b) aufweist, der unterhalb des Hebels (2) hervorsteht; und
(c) Mittel (16) zum Vorspannen des Riegels (11) von der nicht-verriegelnden Position in Richtung der verriegelnden Position;
dadurch gekennzeichnet, daß nur eine Bewegung des oberen Bereichs (11a) des Riegels (11) nach hinten von dem freien Ende des Vorderabschnitts (3) zu dem Schwenkabschnitt (4) den Riegel aus der verriegelnden Position in die nicht-verriegelnde Position bewegt.

2. Aufbau nach Anspruch 1, bei dem sowohl der Riegel (11) als auch das Vorspannmittel (16) am Hebel angebracht sind.

3. Aufbau nach Anspruch 1 oder 2, bei dem die Wirkung des Vorspannmittels (16) des Riegels (11) bewirkt, daß der Riegel den Hebel (2) von der aktiven Position in die inaktive Position bewegt.

4. Aufbau nach einem der vorhergehenden Ansprüche, bei dem, wenn der Riegel (11) sich in seiner verriegelnden Position und der Hebel (2) sich in seiner inaktiven Position befindet, der Riegel (11) an einem Anschlag (14c) am Hebel (2) so anliegt, daß eine Bewegung des oberen Bereiches (11a) des Riegels nach vorne verhindert wird.

5. Aufbau nach einem der vorhergehenden Ansprüche, bei dem der obere und der untere Bereich (11a, 11b) ein Riegelelement (11) mit einem mittleren Bereich bilden, der schwenkbar am Hebel (2) angebracht ist.

6. Sicherheitshebelaufbau (1) für ein Elektrowerkzeug, mit einem Hebel (2) mit einem länglichen Vorderabschnitt (3) und einem hinter dem länglichen Vorderabschnitt (3) angeordneten Schwenkabschnitt (4), einem Riegelelement (11), das schwenkbar am Vorderabschnitt (3) des Hebels (2) angebracht ist, so daß es zwischen einer verriegelnden Position, in der der obere Bereich (11a) des Riegelelementes (11) manuell von oberhalb des Hebels (2) angreifbar ist und ein unterer Bereich (11b) des Riegelelementes (11) unterhalb des Hebels (2) hervorsteht, und einer nicht-verriegelnden Position bewegbar ist, in der das Riegelelement (11) ungefähr entlang des länglichen Vorderabschnittes (3) des Hebels (2) liegt, Mitteln (16) zum Vorspannen des Riegelelementes (11) in Richtung der verriegelnden Position, dadurch gekennzeichnet, daß sich der obere Bereich (11a) des Riegelelementes (11) nach hinten bewegt, wenn das Riegelelement sich von der verriegelnden Position zur nicht-verriegelnden Position bewegt, wobei der Sicherheitshebelaufbau ferner Mitteln (14c) enthält, die verhindern, daß das Riegelelement (11) durch eine Bewegung des oberen Bereichs (11a) des Riegelelementes nach vorne in die nicht-verriegelnde Position bewegt wird.

7. Aufbau nach Anspruch 5 oder 6, bei dem das Vorspannmittel eine Feder (16) enthält, die zwischen dem Riegelelement (11) und dem Hebel (2) wirkt.

8. Aufbau nach Anspruch 7, bei dem die Feder eine Torsionsfeder (16) ist, die auf einem Drehstift (12) angeordnet ist, der das Riegelelement (11) trägt.

9. Elektrowerkzeug mit einem länglichen Gehäuse mit einem Greifabschnitt (8), einem Element (9), das zum Starten des Elektrowerkzeugs betätigbar ist, und einem Sicherheitshebelaufbau (1) nach einem der vorhergehenden Ansprüche.

10. Elektrowerkzeug nach Anspruch 9, bei dem das betätigbare Element (9) aus dem länglichen Gehäuse vor dem Schwenkabschnitt (4) des Hebels (2) so hervorsteht, daß es heruntergedrückt wird, wenn der Hebel (2) in seine aktive Position bewegt wird.

## Revendications

1. Assemblage à levier de sécurité (1) pour un outil à moteur ayant un corps allongé avec une partie saisissable (8) et ayant un élément actionnable (9) qui doit être actionné par l'assemblage à levier de sécurité (1) pour faire démarrer l'outil à moteur, ledit assemblage à levier de sécurité (1) comprenant :
(a) un levier (2) ayant une partie avant allongée (3) et une partie à pivot (4) reposant à l'arrière de la partie avant allongée (3) et qui doit être montée à pivot sur l'outil à moteur de façon que le levier (2) puisse pivoter entre une position de non-fonctionnement dans laquelle la partie avant allongée (3) s'étend vers l'avant suivant un certain angle au-dessus de la partie saisissable (8) de l'outil à moteur et dans laquelle le levier (2) n'actionne pas l'élément actionnable (9), et une position de fonctionnement dans laquelle la partie avant allongée (3) est située plus près de la partie saisissable (8) et dans laquelle le levier (2) actionne l'élément actionnable (9);
(b) un loquet (11) pouvant se déplacer entre une position de blocage dans laquelle il est capable d'empêcher le déplacement du levier (2) de la position de non-fonctionnement jusqu'à la position de fonctionnement et une position de non-blocage dans laquelle il est capable de permettre ledit mouvement, le loquet (11) - en position de blocage - ayant une partie supérieure (11a) qui peut être engagée manuellement du dessus du levier (2) et une partie inférieure (11b) faisant saillie en dessous du levier (2); et
(c) un moyen (16) pour déplacer le loquet (11) de la position de non-blocage à la position de blocage;
caractérisé en ce que seul le mouvement vers l'arrière depuis extrémité libre de la partie avant (3) vers la partie à pivot (4) de la partie supérieure (11a) du loquet (11) déplace le loquet de la position de blocage à la position de non-blocage.

2. Assemblage selon la revendication 1, dans lequel le loquet (11) et le moyen de déplacement (16) sont montés sur le levier.

3. Assemblage selon la revendication 1 ou 2, dans lequel l'action du moyen de déplacement (16) sur le loquet (11) a pour effet que le loquet déplace le levier (2) de la position de fonctionnement à la position de non-fonctionnement.

4. Assemblage selon l'une quelconque des revendications précédentes dans lequel, lorsque le loquet (11) est en position de blocage et que le levier (2) est en position de non-fonctionnement, le loquet (11) est en contact avec une butée (14c) sur le levier (2) de façon à empêcher le déplacement vers l'avant de la partie supérieure (11a) du loquet.

5. Assemblage selon l'une quelconque des revendications précédentes, dans lequel les parties supérieure et inférieure (11a, 11b) constituent un élément de blocage (11) ayant une partie intermédiaire qui est montée à pivot sur le levier (2).

6. Assemblage à levier de sécurité (1) pour un outil à moteur, comprenant un levier (2) ayant une partie avant allongée (3) et une partie à pivot (4) reposant à l'arrière de la partie avant allongée (3), un élément à loquet (11) monté à pivot sur la partie avant (3) du levier (2) pour permettre son déplacement entre une position de blocage dans laquelle une partie supérieure (11a) de l'élément à loquet (11) peut être engagée manuellement par-dessus le levier (2), et une partie inférieure (11b) de l'élément à loquet (11) fait saillie en dessous du levier (2) et une position de non-blocage dans laquelle l'élément à loquet (11) est situé approximativement le long de la partie avant allongée (3) du levier (2), un moyen (16) pour pousser l'élément à loquet (11) en position de blocage, caractérisé en ce que la partie supérieure (11a) de l'élément à loquet (11) se déplace vers l'arrière lorsque l'élément à loquet se déplace de la position de blocage à la position de non-blocage, et l'assemblage de levier de sécurité comprenant en outre un moyen (14c) pour empêcher le déplacement de l'élément à loquet (11) de la position de non-blocage par déplacement vers l'avant de la partie supérieure (11a) de l'élément à loquet.

7. Assemblage selon la revendication 5 ou 6, dans lequel le moyen de déplacement comprend un ressort (16) agissant entre l'élément à loquet (11) et le levier (2).

8. Assemblage selon la revendication 7, dans lequel le ressort est un ressort à torsion (16) monté sur une broche à pivot (12) supportant l'élément à loquet (11).

9. Outil à moteur comprenant un corps allongé avec une partie saisissable (8), un élément (9) qui peut être actionné pour faire démarrer l'outil à moteur et un assemblage à levier de sécurité (1), selon l'une quelconque des revendications précédentes.

10. Outil à moteur selon la revendication 9, dans lequel l'élément actionnable (9) fait saillie du corps allongé à l'avant de la partie à pivot (4) du levier (2) de façon à être enfoncé lorsque le levier (2) est amené dans sa position de fonctionnement.
